# EUROPEAN PATENT SPECIFICATION

(11) **EP 0 698 852 B1**
(45) Date of publication and mention of the grant of the patent: **28.05.2003**
(21) Application number: 95108661.0
(22) Date of filing: 06.06.1995
(51) Int. Cl.: G06F 15/02

(54) **Power-off procedure for data processing apparatus**
Abschaltverfahren für Datenverarbeitungsgerät
Procédé de coupure d'alimentation pour dispositif de traitement de données

(30) Priority: 24.08.1994 JP 19987594
(43) Date of publication of application: 28.02.1996
(73) Proprietor: SHARP KABUSHIKI KAISHA, Osaka 545 (JP)
(72) Inventor: Nakasuji, Masataka, Nara-shi, Nara (JP)
(74) Representative: Müller, Frithjof E., Dipl.-Ing.

(56) References cited:
- PATENT ABSTRACTS OF JAPAN vol. 014, no. 219 (P-1045), 9 May 1990 (1990-05-09) & JP 02 050255 A (SANYO ELECTRIC CO LTD), 20 February 1990 (1990-02-20)
- PATENT ABSTRACTS OF JAPAN vol. 016, no. 171 (P-1343), 24 April 1992 (1992-04-24) & JP 04 015864 A (HITACHI LTD), 21 January 1992 (1992-01-21)
- PATENT ABSTRACTS OF JAPAN vol. 014, no. 072 (P-1004), 9 February 1990 (1990-02-09) & JP 01 290068 A (SHARP CORP), 21 November 1989 (1989-11-21)
- PATENT ABSTRACTS OF JAPAN vol. 014, no. 015 (P-989), 12 January 1990 (1990-01-12) & JP 01 260569 A (CANON INC), 17 October 1989 (1989-10-17)

## Description

### BACKGROUND OF THE INVENTION

### 1. Field of the Invention

The present invention relates to a data processing apparatus such as an electronic notebook, a portable information terminal device, a personal computer and the like, and more particularly to a data processing apparatus having a clock function for processing date related data such as schedule control, and a power supply on/off function.

### 2. Description of the Related Art

Generally, a data processing apparatus is provided with a power supply on/off function. In particular, in a portable electronic apparatus operated by a battery, the power on/off function is indispensable for extending the life of the battery. In the data processing apparatus for processing date related information, however, even while the power supply is turned off, the clock function and date related data holding function are working. In such a data processing apparatus, when the power supply is turned off, (1) the power is cut off immediately without displaying anything, (2) the character row message or graphic message telling that the power is cut off or that the operation is to be stopped is displayed, or (3) only the data relating to this day is displayed. For example, in Japanese Unexamined Patent Publication 2-50255 (1990), when the power supply is turned off, the constitution capable of control of displaying/not displaying the schedule content on this day is disclosed.

Processing of time related data such as schedule control is intended to processing the schedule and time related data securely in place of a man who is likely to forget the schedule. For example, upon reaching or approaching the date and time of a preset schedule, an operation for calling a person's attention thereto is activated. However, for the power off period, such an operation of calling a person's attention is not conducted in principle. On the other hand, as a person becomes busy, the person tends to forget the individual schedules, and accordingly the necessity of schedule control increases. As the date related data, a certain ideas hitting upon or thinking of a certain moment is often once stored as a memo in order to rethink it precisely or review from other angle later. In such a case, the person may forget not only the content of his(her) memory may forget, but also even the fact of once storing as date related data. Unless one remembers that the schedule or ideal has been stored in the data processing apparatus, one cannot operate the data processing apparatus at an appropriate timing, and control of effective date related data cannot be done. We often tend to forget the time, too, and to be in trouble.

In the case of (3) mentioned above, for example, if the date related information is displayed when turning off the power supply, the information the storing of which has been forgotten can be displayed, so that the data processing apparatus may be utilized effectively to a certain extent. In the operations of (1), and (2) above mentioned, they does not help a person in remembering the memory content. In the prior art (3) displaying the dated related information of this day, only the information relating to the same date is displayed, if many affairs are scheduled on the same day, all cannot be displayed in the limited display screen, or if many affairs are scheduled in near future or near past although few are scheduled on this day, effective display is not expected.

### SUMMARY OF THE INVENTION

It is hence a primary object of the invention to provide a data processing apparatus capable of displaying date related information that a person may forget at high possibility, in cooperation with the power turning off operation.

The invention relates to a data processing apparatus comprising power on/off operating means, input means of date related data including date information, storage means of inputted date related data, retrieval means of stored date related data, display means of retrieved date related data, and clock means of actual time, which further comprises:
detecting means for detecting a power cut-off operation;
condition setting means for setting a time condition for retrieving date related data on the basis of the moment of power cut-off operation, and a display condition for displaying the date related data in display means; and
control means for controlling so as to read out the clock output from the clock means upon power cut-off operation in response to the output from the detecting means, retrieve the date related data of which date information satisfies the time condition, on the basis of the read-out time of power cut-off operation by the retrieval means, display in the display means according to the display condition, and activate the predetermined power cut-off operation.

The time condition of retrieval of the invention is characterized by going back to the past from the power cut-off operation real time.

The time condition of retrieval of the invention is characterized by advancing to the future from the cut-off operation real time.

The display condition of the invention concerns the number of cases that can be displayed once in the display means, and the control means is characterized by making the retrieval means retrieve the date related data up to this number of cases.

Further the invention provides a data processing apparatus comprising power on/off operating means, input means of date related data including date information, storage means of inputted date related data, retrieval means of stored date related data, display means of retrieved date related data, and clock means of real time, which further comprises:
detecting means for detecting power cut-off operation, and control means for displaying a real time of power supply cut-off moment when the power supply is turned off in the display device in response to the output from the detecting means.

According to the invention, at the power supply cut-off moment detected by the detecting means, the control means retrieves the date related data stored in the storage means according to the time condition preset in the setting means, and displays the retrieved date related data in the display means according to the display condition. Since the date related data to be retrieved is retrieved on the basis of the changeover operation moment, the recent date related data around the cut-off operation moment can be displayed. For example, if the schedule table for a time close to the cut-off operation moment is displayed, an early measure can be taken, if forgotten.

Furthermore according to the invention, since the time condition of retrieval is to go back to the past from the cut-off operation real time, the fact of making a memo in the past will be securely remembered, and the past schedule can be confirmed. If it is found that the schedule has been forgotten, a measure can be taken without delay.

According to the invention, since the time condition of retrieval is to advance to the future from the cut-off operation real time, the schedule after the cut-off operation real time can be securely remembered.

According to the invention, since the date related data that can be displayed once is displayed on the basis of the cut-off operation real time, and the date related data easy to be forgotten can be displayed by effectively utilizing the display means.

Further according to the invention, the real time of cut-off operation moment is displayed in the display means, the time of the operation moment can be clearly displayed.

Thus, according to the invention, on the basis of the cut-off operation moment, the date related data stored in the storage means can be retrieved and displayed according to the preset time condition. Since the date related data such as the schedule for the time closest to the power cut-off operation moment is displayed, the schedule for the time closest to the operation moment is sufficiently understood by the user of the apparatus at the convenient timing when, for example, other action is taken.

Further according to the invention, since the time related data is retrieved and displayed by going back to the past from the power cut-off operation moment, the schedule for the past time closest to the current time can be confirmed. If there is any unfinished affair due to lapse of memory or misunderstanding, it can be found early, and as a result an early measure can be taken. When the schedule is heavy, one is apt to forget the schedule, but by confirming newly, an unfinished affairs may be noticed early and an effective measure may be taken.

Further according to the invention, the date related data is retrieved and displayed by advancing toward the future from the power cut-off operation moment, and a lapse of memory or misunderstanding of the date related data is displayed, so that an appropriate measure may be taken by securely reading out the schedule.

Further according to the invention, the date related data that can be displayed once in the display means is retrieved and displayed, and therefore the date related data of plural affairs for a time close to the power cut-off moment can be securely confirmed. As a result the view at a glance is improved, and even if there is no date related data for that day of operation, the schedule in the near future or near past can be displayed sufficiently, so that date related data can be effectively confirmed regardless of the time.

Still further according to the invention, since the real time measured by the clock means is displayed when the power supply is turned off, the date and time can be shown to the user of the apparatus timely, for example, on the occasion of the change of activity. Thus, one is prevented from forgetting the date, and, in particular, from forgetting the current time, and the effects on the schedule may be minimized even in a busy person.

### BRIEF DESCRIPTION OF THE DRAWINGS

Fig. 1 is a block diagram showing a schematic electrical constitution of an embodiment of the invention;
Fig. 2 is a front view showing the appearance of the data processing apparatus of the embodiment of Fig. 1;
Fig. 3 is a flow chart showing operations of the embodiment of Fig. 1;
Fig. 4 is a flow chart showing operations of the embodiment of Fig. 1;
Fig. 5 is a flow chart showing operations of the embodiment of Fig. 1;
Fig. 6 is a flow chart showing operations of the embodiment of Fig. 1;
Fig. 7 is a flow chart showing operations of the embodiment of Fig. 1;
Fig. 8 is a flow chart showing operations of another embodiment;
Fig. 9 is a schematic view showing the structure of schedule data stored in a data unit 113 provided in a RAM 11 in the embodiment of Fig. 1;
Figs. 10A-10E are simplified front views showing a display condition in each embodiment; and
Fig. 11 is a partial electric circuit diagram showing the structure relating to a power supply in the embodiment of Fig. 1.

### DETAILED DESCRIPTION OF THE PREFERRED EMBODIMENTS

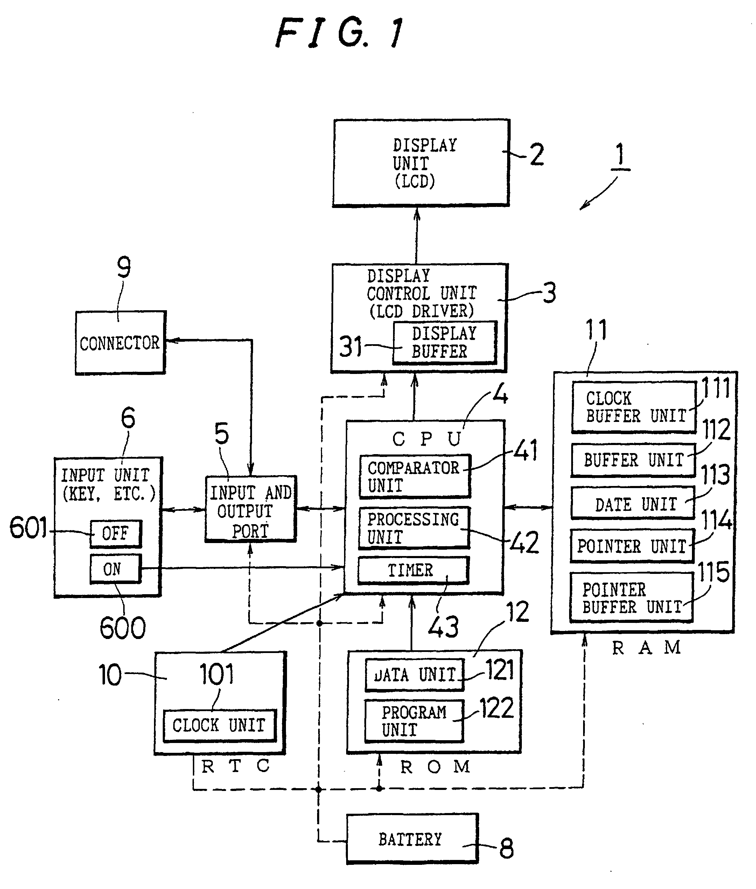

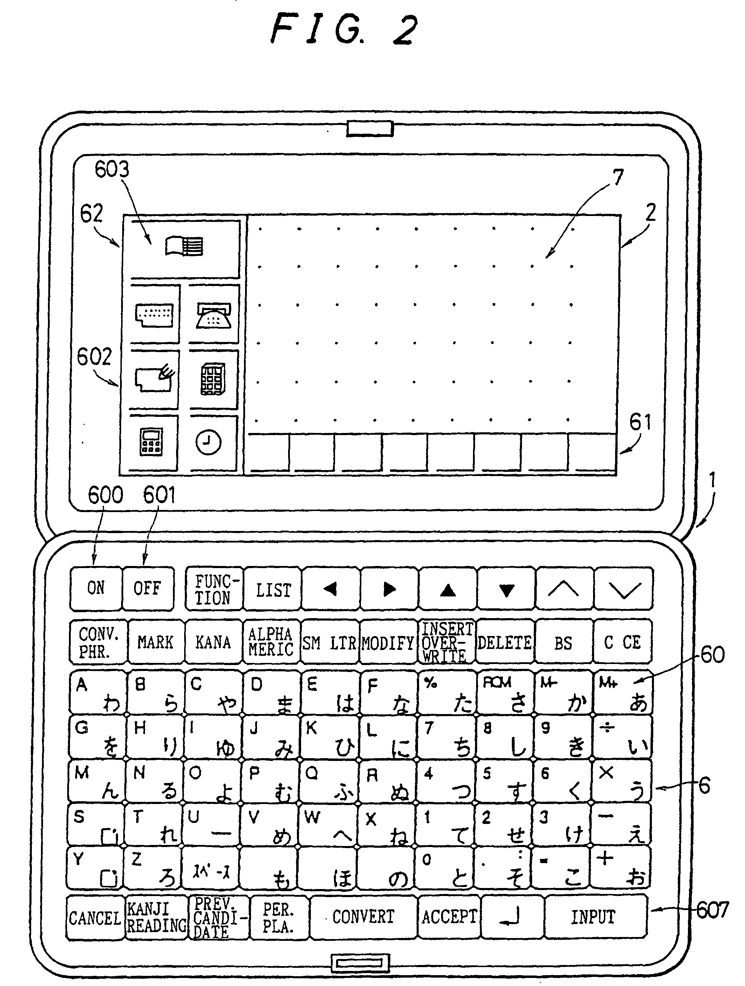

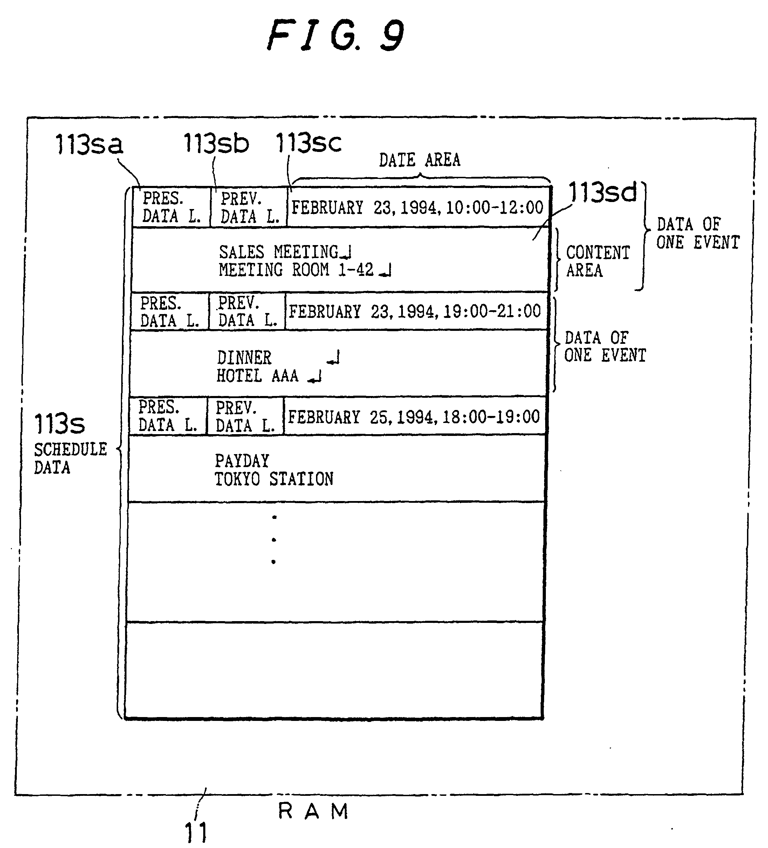

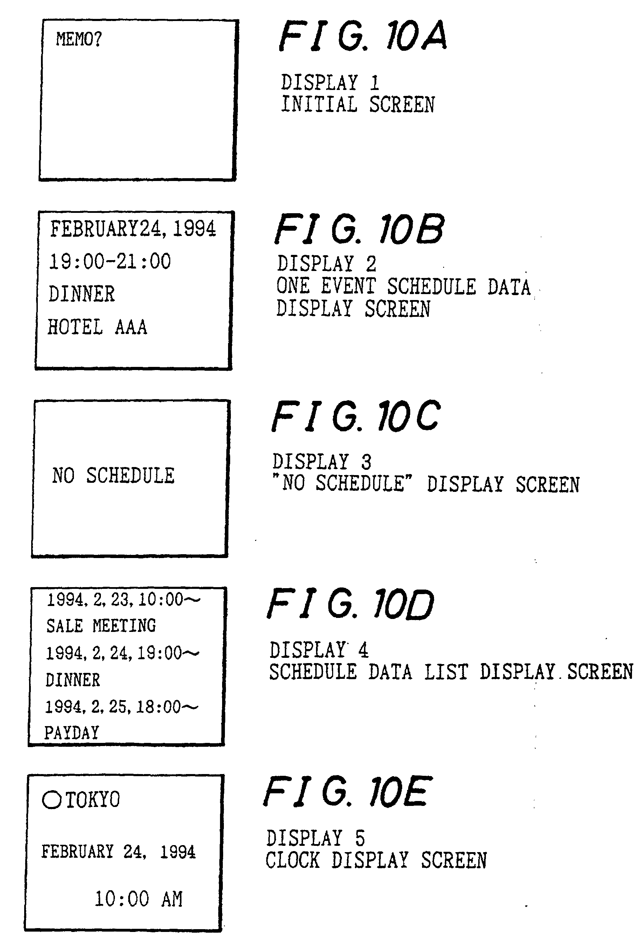

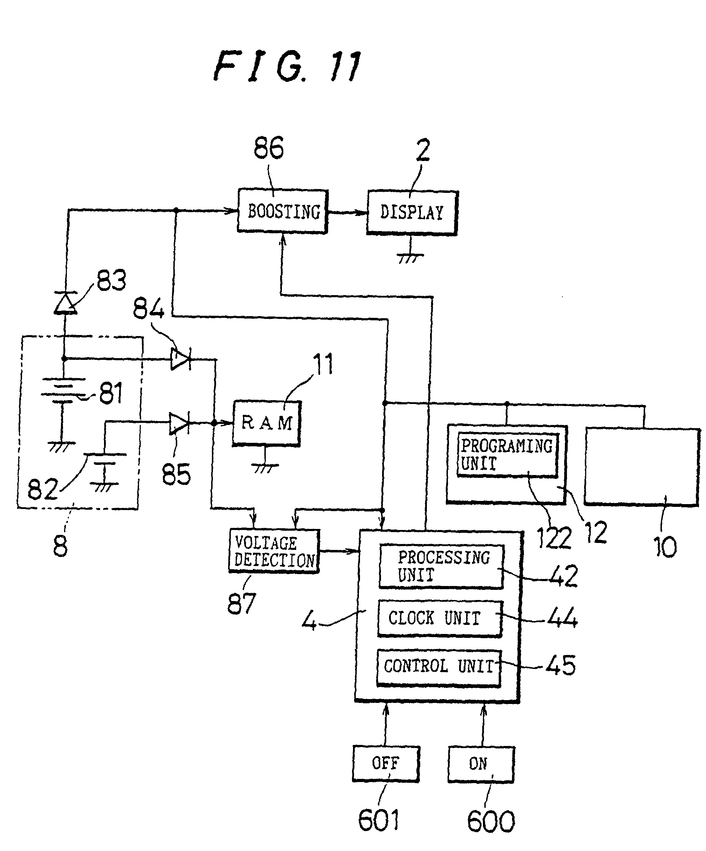

Fig. 1 shows a schematic electrical constitution of an embodiment of the invention, Fig. 2 shows the appearance of the constitution of the embodiment of Fig. 1, Figs. 3 to 8 show operations of the embodiment of Fig. 1, Fig. 9 shows the composition of data stored in a RAM in the embodiment of Fig. 1, Fig. 10 shows the screen composition displayed via an operation of the embodiment of Fig. 1, and Fig. 11 shows the constitution relating to a power on/off operation of the embodiment of Fig. 1. According to these drawings, an embodiment of the invention is described in detail below.

As shown in Fig. 1, a data processing apparatus 1 of an embodiment of the invention comprises a display unit 2 which is display means realized by a liquid crystal display device (LCD) or the like, a display control circuit 3 such as a LCD driver for driving the display unit 2, a CPU 4 operating as control means, an input and output port 5, an input device 6 including input means such as keys, a battery 8 for feeding electric power to the entire data processing apparatus 1, a connector 9 connected to the input and output port 5 for connecting signals between the data processing apparatus and outside, an RTC 10 as clocking means for clocking the real time, a RAM 11 as storage means, and a ROM 12 storing programs for operating the CPU 4 as retrieval means, detecting means and control means. In the display control circuit 3, a display buffer 31 for storing the image data displayed by the display unit 2 is contained. The CPU 4 includes a comparator 41, a processor 42, and a timer 443. The input device 6 contains an ON key 600 for turning on the power supply, and an OFF key 601 for turning off the power supply. The RTC 10 contains a clock 101 for clocking the real time. The RAM 11 comprises a clock buffer unit 111, a buffer unit 112, a data unit 113, a pointer unit 114, and a pointer buffer unit 115. The ROM 12 includes a data unit 121 and a program unit 122.

As shown in Fig. 2, the input device 6 comprises a data input key group 60 for entering character information and numerical information used in the application programs of the data processing apparatus 1, a graphic call key group 71 disposed beneath the display unit 2, and a mode setting key group 62 for calling functions of the data processing apparatus 1, among others. The ON key 600 and OFF key 601 are disposed in the upper left part of the data input key group 60. The mode setting key group 62 contains a memo mode key 602 for showing the memo mode, and a schedule mode key 603 for showing the schedule mode.

The display unit 2 is an LCD of dot matrix composition, and is driven through the display control circuit 3 on the basis of the control signal from the CPU 4, and the retrieval results, operation results, messages, and others are displayed on a display screen 7.

The input device 6 comprises the data input key group 60, the graphic call key group 61, and mode setting key group 62, and input operation to these keys is entered in the CPU 4 through the input and output port 5 in Fig. 1, and is processed according to the program in the ROM 12. The ROM 12 contains the data unit 121 and program unit 122 for realizing various functions of the data processing unit 1. According to the programmed operation of the CPU 4, In the clock buffer unit 111 in the RAM 11, the date data read out from the RTC 10 is temporarily stored. In order to obtain a clock output from the RTC 10, a specific call procedure is required. By preliminarily storing the clock content in the clock buffer unit 111 in the RAM, the real time can be read out promptly anytime. The buffer unit 112 in the RAM 11 is used as the working area for temporarily storing the data entered from the input device 6, temporarily storing the data read out from other parts of the RAM 11, or temporarily storing the data stored in the ROM 12. In the pointer unit 114, the pointer for controlling the data in the data unit 113 is stored. In the pointer buffer unit 115, plural sets of data of the pointer unit 114 are stored.

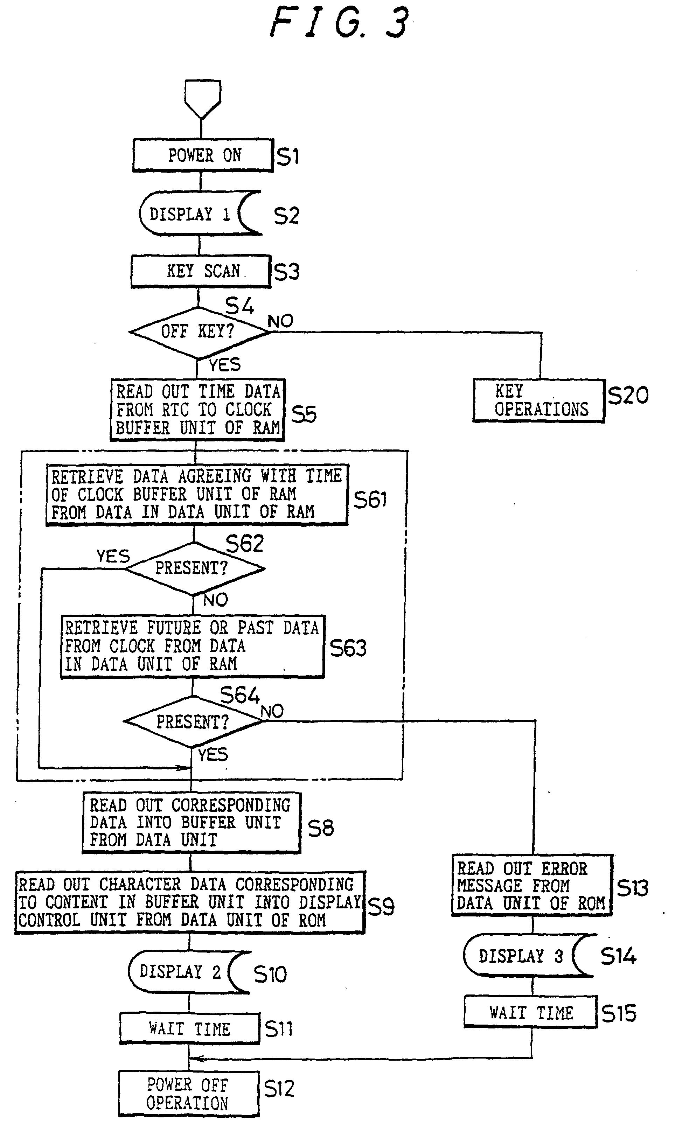

Fig. 3 shows operations of the structure of Fig. 1. When at step S1 the ON key 600 is operated to turn on the power supply, and the memo mode key 602 is pressed down, the process is advanced to step S2, where an indication as shown in Fig. 10 A is displayed, and is advanced to step S3 of key scan operation, where key input is waited for.

Relating to the embodiment, it is judged at step S4 whether the OFF key 601 is pressed down or not. When the OFF key 601 has been pressed, the process is advanced to step S5, where the time data is read out from the RTC 10 into the clock buffer unit 111 of the RAM 11. Consequently, at step S6, the data closest to this time data read out is retrieved from the schedule data which is the date related data stored in the data unit 113. When the data is retrieved, the process is advanced to step S8, where the corresponding data is read out from the data unit 113 into the buffer unit 112. Next, at step S9, the character data corresponding to the content in the buffer unit 112 is read out into the display control unit 3 from the data unit 121 of the ROM 12. The read-out schedule data is displayed at step S10 as shown in Fig. 10B. At step S11, the timer 43 in the CPU 4 is operated, and after a lapse of a predetermined time, the power supply is cut off at step S12. The time to be preset in the timer 443 is selected to be, for example, about several seconds to ten seconds.

When it is judged at step S6 that no data is retrieved, the process is advanced to step S13, where an error message is read out from the data unit 121 of the ROM 12. The read-out error message is displayed as shown in Fig. 10 C at step S14, and at step S15, after a lapse of a specific time, for example, a waiting time of about 5 seconds, the power supply is turned off at step S12.

The data retrieval operations at step S6 will be described more specifically. First at step S61, the data agreeing with the time stored in the clock buffer unit 111 of the RAM 11 is searched from the schedule data stored in the data unit 113 of the RAM 11. At step S62, it is judged whether the agreeing data exists or not. When the agreeing data is found, the process goes to step 8, and when the agreeing data is not found, the process is advanced to step S63, where the data in the future or in the past from the time of the clock buffer unit 111 is retrieved from the data in the data unit 113 of the RAM 11. The retrieval direction is preset in the data unit 113. As a result of retrieval, at step S64, it is judged that corresponding data exists or not. When the corresponding data is found, the process goes to step S8, and when there is no corresponding data, the process goes to step S13.

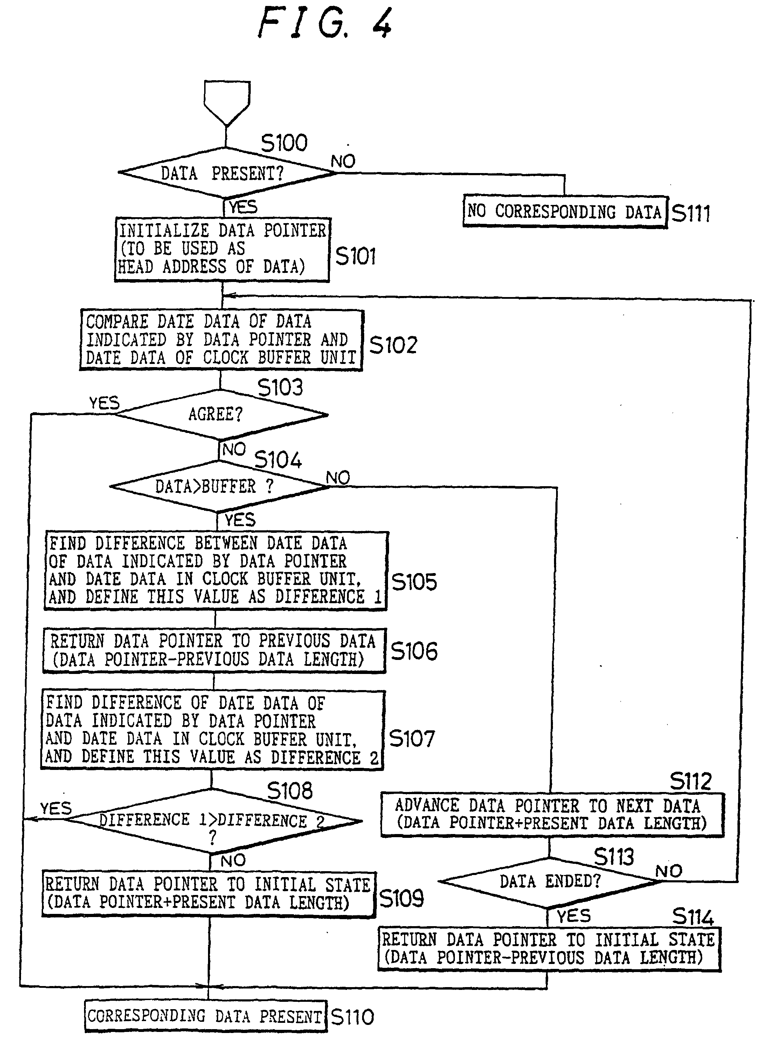

Referring to Fig. 4, the retrieval operation of the recent date related data from the power cut-off operation moment is shown in response to the operation at step S6 in Fig. 3. At step S100, it is judged whether the retrieval objective data exists in the data unit 113 or not. When the retrieval objective data such as schedule data is stored in the data unit 113, the pointer in the pointer unit 114 indicates the address in the data unit 113, and when the data is not stored, the pointer is a predetermined null pointer, so that it is easily judged that the data exists or not. When the data is judged to be present, going to step S101, the data pointer unit for retrieving the schedule data or the like stored in the data unit 113 is initialized to be a value showing the beginning address of the data. At next step S102, the date data contained in the data of the data pointer and the date data stored in the clock buffer unit 111 are compared in the comparator unit 41. At step S103, it is judged whether the two sets of date data agree with each other or not.

When it is judged at step S103 that the two sets of date data do not agree with each other, the process advances to step 104, where it is judged whether the date data of the data indicated by the data pointer is greater than the date data stored in the clock buffer unit 111 or not. When judged to be greater, the process is advanced to step S105, where the difference between the date data of the data indicated by the data pointer and the date data in the clock buffer unit 111 is found, which difference is considered as difference 1. Next, at step S106, the data pointer is returned to the previous data. For this purpose, the length of the previous data is subtracted from the value of the data pointer. At step S107, the difference between the date data of the data indicated by the data pointer and the date data in the clock buffer unit 111 is found, which difference is considered as difference 2. At step S108, difference 1 is judged to be greater than difference 2 or not. When difference 1 is judged to be not greater than difference 2, the process is advanced to step S109, where the value of the data pointer is returned to the initial value. That is, the current data length is added to the value of the data pointer. The current data length is equal to the length considered as the previous data length at step S106. When at step S103 it is judged that the two sets of date data agree with each other, when it is judged at S108 that difference 1 is greater than difference 2, or when the operation at step S109 has ended, the process is advanced to step S110, where the processing in the case where the corresponding data exists is carried out. The operation of step S108 is carried out for the purpose of selection of the data at a time as close to the power cut-off operation moment as possible even when the two sets of date data do not agree with each other.

When judged at step S100 that the retrieval objective data does not exist, the processing in the case where no corresponding data exists is done at step S111. At step S104, when the date data of the data indicated by the data pointer is judged to be not greater than the date data of the clock buffer unit 111, the process is advanced to step S112, where the current data length is added to the data pointer in order to advance the data pointer to the next data. At step S113, it is judged whether the data indicated by the data pointer has ended or not. When judged that the data has not ended, the process returns to step S102. When judged that the data has ended, the data pointer is returned to the initial position at step S114, that is, the value of the previous data length is subtracted from the data pointer, and the operation returns to step S110.

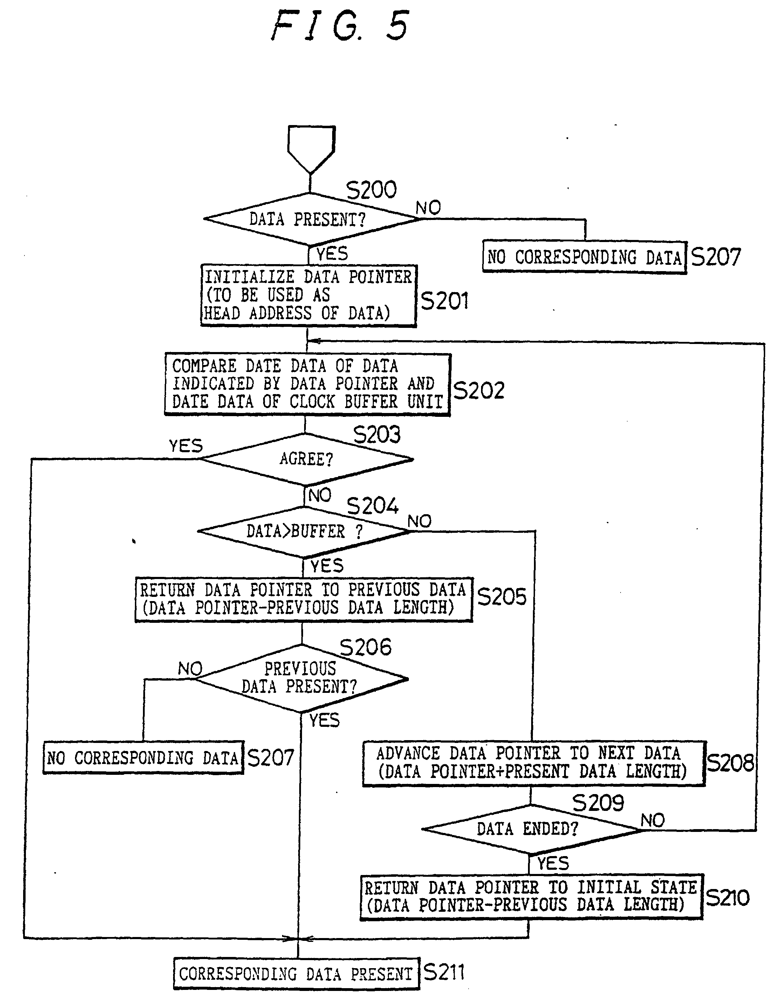

Fig. 5 shows the retrieval operation of the date related data for the past most closest from the power cut-off operation moment in response to the operation at step S6 in Fig. 3. At step S200, it is judged whether there is any retrieval objective data in the data unit 113. When the data is judged to exist, the data pointer is initialized at step S201, and the data beginning address is obtained. At next step S202, the date data indicated by the data pointer and the date data of the clock buffer unit 111 are compared in the comparator unit 41 in the CPU 4. It is judged at step S203 whether the two sets of date data agree with each other or not, and when not agreeing, the process is advanced to step S204, where it is judged whether the date data of the data indicated by the data pointer is greater than the date data of the clock buffer unit 111 or not. If judged to be greater, the process is advanced to step S205, where the previous data length is subtracted from the value of the data pointer in order to return the data pointer to the previous data. At step S206, it is judged whether there is any previous data or not, and when judged that no previous data exist, the process is advanced to step S207, the processing in the case where no corresponding data exists is conducted.

When at step S204 the date data of the data indicated by the data pointer is judged to be not greater than the date data of the clock buffer unit 111, the process skips to step S208, where the current data length is added to the value of the data pointer in order to advance the data pointer to the next data. At step S209 it is judged whether the data has ended or not. When judged that the data has not ended, the operation returns to step S202. When the data is judged to have ended, the process is advanced to step S210, where the previous data length is subtracted from the value of the data pointer in order to return the data pointer to the initial state. When at step S203 it is judged that the two sets of date data agree with each other, when it is judged at step S206 that the previous data exists, or when the operation of step S210 has ended, the process is advanced to step S211, where the processing in the case where the corresponding data exists is carried out. When it is judged at step S200 that no retrieval objective data exists, the processing in the case where no corresponding data exists is executed at step S207.

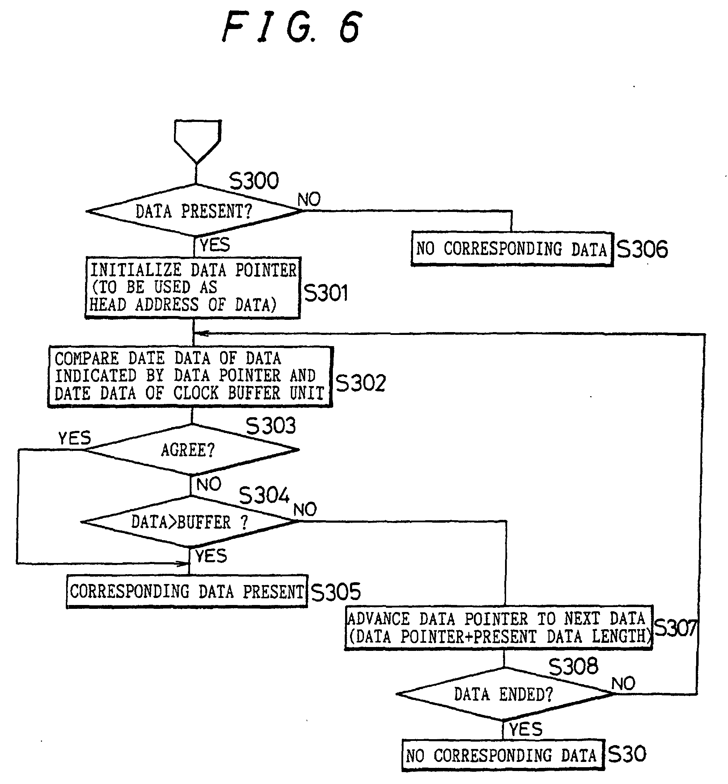

Fig. 6 shows the retrieval operation of the data of the future closest from the power cut-off operation moment in response to step S6 in Fig. 3. At step S300, it is judged whether there is any data in the data unit 113. When it is judged that there is any data, the process is advanced to step S301, where the data pointer is initialized to the data beginning address. At step S302, the date data of the data indicated by the data pointer and the date data in the clock buffer unit 111 are compared. When it is judged at step S303 that the two sets of date data do not agree with each other, the process is advanced to step S304, where it is judged whether the date data of the data indicated by the data pointer is greater than the date data in the clock buffer unit 111. When judged to be greater, the press is advanced to step S305, and when judged to be not greater, the process is advanced to step S307. When the date data is judged at step S304 to be greater, it means that the data relates to a future date, and the processing in the case where the corresponding data exists is executed at step S305. Also when it is judged at step S303 that the two sets of date data agree with each other,the processing in the case where the corresponding data exists is executed at step S305.

When it is judged there is no data in the data unit 113 at step S300, the processing in the case where no corresponding data exist is executed at step S306. When it is judged at step S304 whether the date data is smaller, it means the data belongs to the past, and hence in order to advance the data pointer to the next data at step S307, the current data length is added to the data pointer value. It is judged at step S308 whether the data indicated by the new data pointer has ended or not, and when the data is judged to have not ended, the process goes to step S302. When the data is judged to have ended, the processing in the case where no corresponding data exists is executed at step S306.

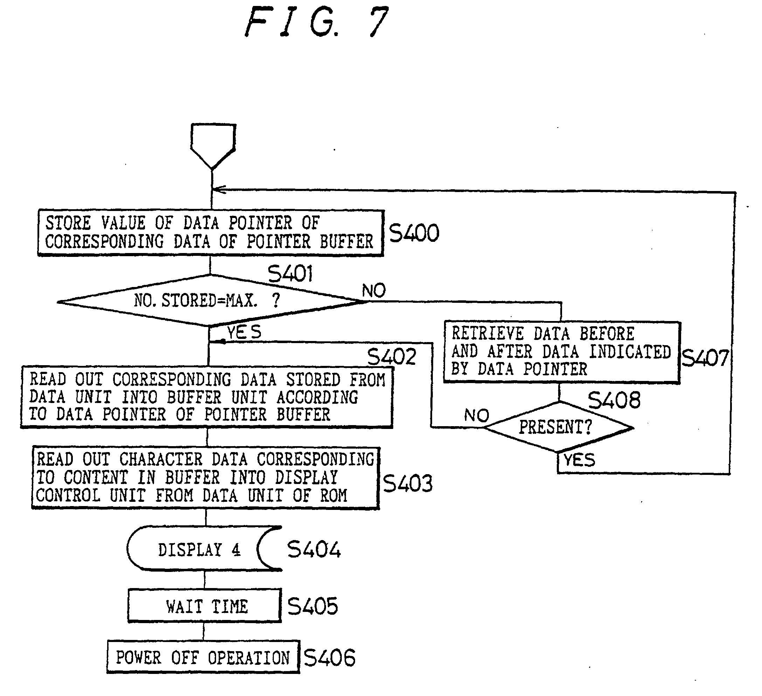

Fig. 7 shows the retrieval operation of plural sets of data in the case where the corresponding data is found at step S6 in Fig. 3. As a result of retrieval according to the time condition mentioned above, when the corresponding data is judged to exist, the value of the data pointer indicating the corresponding data is stored in the pointer buffer unit 115 at step S400. At next step S401, it is judged whether the number of data pointers stored already in the pointer buffer unit 115 has reached a maximum value of, for example, 3, or not. When judged to have reached the maximum value, the process is advanced to step S402, where the corresponding data of the stored quantity is read out from the data unit 113 into the buffer unit 112, according to the data pointers stored in the pointer buffer unit 115. At step S403, the character data corresponding to the content in the buffer unit 112 is read out into the display control circuit 3 from the data unit 121 of the ROM 12. At step S404, a list of schedule is displayed as shown in Fig. 10D, and after a lapse of a waiting time of, for example, about 10 seconds at step S405, the power supply is turned off at step S406.

When at step S401 the number of stores is not judged to have reached the maximum value, the data before and after the data indicated by the data pointer is retrieved at step S407 according to the conditions in Fig. 4 to Fig. 6. At step S408, it is judged whether there is any data before and after. When judged that any data exists, the process returns to step S400. When judged that no data exists, the process returns to step S402. In this cases, the data is displayed even if the number of stores has not reached the maximum value.

In Fig. 7, taking account of displaying on the display screen 7 of the display unit 2, the maximum number is supposed to be 3, but it is preferred to change appropriately depending on the constitution of the display screen 7 of the display unit 2. Without using the pointer buffer 115, it is also possible to retrieve for the maximum storageable data, read out the corresponding data in the buffer unit 112 of the RAM 11 according to the value of the data pointer as a result of retrieval sequentially, and display the data additionally in the display buffer 31.

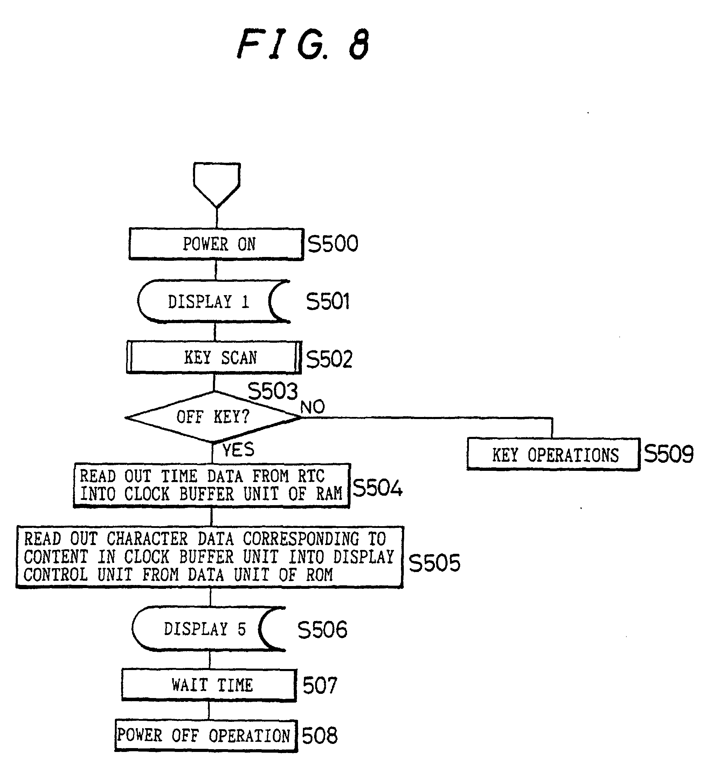

Fig. 8 shows the operation of displaying the current time at the time of turning off the power supply as another embodiment of the invention. The operations at steps S500 to S504, and step S509 correspond to the operations at steps S1 to S5, and step S20 in Fig. 3. At step S505, the character data corresponding to the content in the clock buffer unit 111 is read out into the display buffer 31 of the display control circuit 3 from the data unit 12 in the ROM 12. At step S506, displaying the current date and time as shown in Fig. 10E, and after a lapse of a waiting time of, for example, about 10 seconds at step S507, the power supply is turned off at step S508. In the display of the current date and time at step S506, the time difference may be converted to the date and time at a different location of the world having a time difference, and the result may be displayed.

Fig. 9 shows the data composition of schedule data 113s stored in the data unit 113 in the RAM 11. Data of one event composing the schedule data 113s comprises current data length 113sa, previous data length 113sb, date area 113sc, and content area 113sd. The current data length 113sa indicates the length of the data of one event, and by adding a specified length to the beginning address, the beginning address of data of next event is obtained. The previous data length 113sb indicates the length of the previous data, and by subtracting the previous data length from the beginning address of the data, the beginning address of the previous data is obtained. The current data length 113sa is used for retrieving data toward the future, and the previous data length 113sb is used for retrieving data back in the past. In the data area 113sc, the date data is stored. The memory in this date area 113sc and the memory in the clock buffer 11 of the RAM 11 are compared as date data. The structure in the data unit 113 is a list structure wherein the memory contents of the date areas 113sc are stored in order of old date.

Fig. 11 shows the constitution relating to power on/off switching of the electrical constitution in Fig. 1. A battery 8 comprises an operation cell 81 and a memory protection cell 82, and when at least one of the operation cell 81 and memory protection cell 82 is connected to the RAM 11, the supply voltage is fed, and the stored data is saved and protected. That is, from the operation cell 81, electric power can be supplied to the RAM 11 and other parts through diodes 83, 84. From the memory protection cell 82, electric power can be supplied only to the RAM 11 through a diode 85. Of the electric power supplied from the operation cell 81 through the diode 83, the power supplied to the display unit 2 is increased in voltage by a boosting circuit 86. The operation voltage Vcc and backup voltage Vbk are monitored by a voltage detecting circuit 87, and when lowered from the predetermined reference voltage, it is interrupted in the CPU 4, and a message urging to change the battery is displayed.

The CPU 4 comprises the clock unit 44 and the control unit 45, and when the OFF key 601 in the input device 6 is operated, the control unit 45 stops the generation of operation clock signal from the clock unit 44. The CPU 4 operates in synchronism with the clock signal from the clock unit 44, and when the clock signal from the clock unit 44 is stopped, the CPU 4 is put into the shut-off state where almost no electric power is consumed. The CPU 4 is put into the OFF state when the processing unit 42 reads in a predetermined specific command from the program unit 122 of the ROM 12. To return the CPU from the OFF state to the ON state, the ON key 600 provided in the input device 6 is operated. The ON key 600 is directly connected to the CPU 4, and by the operation of the ON key 600 a kind of interrupt signal is given to the control unit 45, thereby starting transmission of the clock unit 44. The boosting circuit 86 is controlled on/off in cooperation with on/off switching of the clock unit 44.

Though in the foregoing embodiments, the data processing apparatus 1 relates to a small-sized electronic appliance such as an electronic notebook operating on battery, in the word processor or personal computer operating by a utility network, the data related information can be properly displayed the same as in the embodiments, by adding a function for power supply processing after displaying for a specified time, the same as in the embodiments, when turning off the power supply.

## Claims

1. A data processing apparatus, comprising:
power on/off operating means (600, 601);
input means (6) of date related data including date information;
storage means (11) for storing inputted date related data;
retrieval means (4) for retrieving stored date related data;
display means (2) for displaying retrieved date related data;
clock means (10) for actual time;
detecting means (4) for detecting a power cut-off operation;
condition setting means for setting a time condition for retrieving date related data on the basis of the moment of power cut-off operation, and a display condition for displaying the date related data in said display means (2); and
control means (4) for controlling so as to read out the clock output from the clock means (10) in response to the output from the detecting means (4), to retrieve the date related data of which date information satisfies the time condition, on the basis of the read out time of the power cut-off operation by the retrieval means (4), to display in the display means (2) according to the display condition, and to activate the predetermined power cut-off operation.

2. A data processing apparatus according to claim 1, wherein the time condition of retrieval is to go back to the past from the power cut-off operation real time.

3. A data processing apparatus according to claim 1, wherein the time condition of retrieval is to advance to the future from the power cut-off operation real time.

4. A data processing apparatus according to claim 1, wherein the display condition concerns the number of cases that can be displayed once in the display means (2), and the control means (4) makes the retrieval means (4) retrieve the date related data up to this number of cases.

5. A data processing apparatus according to claim 1, wherein the control means (4) is arranged to display a real time of a power supply cut-off moment when the power supply is turned off in the display device (2) in response to an output from the detecting means (4).

## Patentansprüche

1. Datenverarbeitungsvorrichtung mit:
einem Leistungs-An/Aus-Betätigungsmittel (600, 601);
einem Eingabemittel (6) von Datum-bezogener Daten einschließlich Datum-Information;
einem Speichermittel (11) zum Speichern eingegebener Datum-bezogener Daten;
einem Wiedergewinnungsmittel (4) zum Wiedergewinnen gespeicherter Datum-bezogener Daten;
einem Anzeigemittel (2) zum Anzeigen wiedergewonnener Datum-bezogener Daten;
einem Taktmittel (10) für die tatsächliche Zeit;
einem Erfassungsmittel (4) zum Erfassen eines Leistungsabschaltevorgangs;
einem Bedingungseinstellmittel zum Einstellen einer Zeitbedingung zum Wiedergewinnen Datum-bezogener Daten auf der Grundlage des Zeitpunkts des Leistungsabschaltevorgangs und einer Anzeigebedingung zum Anzeigen der Datum-bezogenen Daten in dem Anzeigemittel (2); und
einem Steuermittel (4) zum Steuern, um den von dem Taktmittel (10) als Antwort auf die Ausgabe von dem Erfassungsmittel (4) ausgegebenen Takt auszulesen, um die Datum-bezogenen Daten, deren Datum-Information die Zeitbedingung erfüllt, auf der Grundlage der ausgelesenen Zeit des Leistungsabschaltevorgangs durch das Wiedergewinnungsmittel (4) wiederzugewinnen, um in dem Anzeigemittel (2) gemäß der Anzeigebedingung anzuzeigen und um den vorbestimmten Leistungsabschaltevorgang zu aktivieren.

2. Datenverarbeitungsvorrichtung nach Anspruch 1, bei der die Zeitbedingung zur Wiedergewinnung darin besteht, von dem Leistungsabschaltevorgang in Echtzeit in die Vergangenheit zurückzugehen.

3. Datenverarbeitungsvorrichtung nach Anspruch 1, bei der die Zeitbedingung zur Wiedergewinnung darin besteht, von dem Leistungsabschaltevorgang in Echtzeit in die Zukunft vorzugehen.

4. Datenverarbeitungsvorrichtung nach Anspruch 1, bei der die Anzeigebedingung die Anzahl von Fällen betrifft, die einmal in dem Anzeigemittel (2) angezeigt werden können, und das Steuermittel (4) bewirkt, dass das Wiedergewinnungsmittel (4) die Datum-bezogenen Daten bis zu dieser Anzahl von Fällen wiedergewinnt.

5. Datenverarbeitungsvorrichtung nach Anspruch 1, bei der das Steuermittel (4) angeordnet ist, eine Echtzeit eines Leistungsversorgungsabschaltzeitpunkts anzuzeigen, wenn die Leistungsversorgung in der Anzeigevorrichtung (2) als Antwort auf eine Ausgabe von dem Erfassungsmittel (4) abgeschaltet wird.

## Revendications

1. Dispositif de traitement de données comprenant :
un moyen d'activation et de désactivation d'alimentation (600, 601) ;
un moyen d'entrée (6) de données relatives aux dates incluant des informations de dates ;
un moyen de stockage (11) destiné à stocker des données relatives aux dates ;
un moyen d'extraction (4) destiné à extraire des données relatives aux dates stockées ;
un moyen d'affichage (2) destiné à afficher des données relatives aux dates extraites ;
un moyen d'horloge (10) concernant le temps effectif ;
un moyen de détection (4) destiné à détecter une opération de coupure d'alimentation ;
un moyen de définition de condition destiné à définir une condition temporelle pour l'extraction de données relatives aux dates en fonction du moment de l'opération de coupure d'alimentation et une condition d'affichage destinée à afficher les données relatives aux dates sur ledit moyen d'affichage (2) ; et
un moyen de commande (4) destiné à effectuer une commande afin d'extraire la sortie d'horloge du moyen d'horloge (10) en réponse à la sortie du moyen de détection (4), afin d'extraire les données relatives aux dates dont les informations de dates satisfont à la condition temporelle, en fonction du temps lu de l'opération de coupure d'alimentation par le moyen d'extraction (4), afin d'assurer l'affichage sur le moyen d'affichage (2) en fonction de la condition d'affichage et d'activer l'opération de coupure d'alimentation prédéterminée.

2. Dispositif de traitement de données selon la revendication 1 dans lequel la condition temporelle d'extraction consiste à revenir à des événements passés à partir de l'opération de coupure d'alimentation en temps réel.

3. Dispositif de traitement de données selon la revendication 1 dans lequel la condition temporelle d'extraction consiste à progresser dans les événements futurs à partir de l'opération de coupure d'alimentation en temps réel.

4. Dispositif de traitement de données selon la revendication 1 dans lequel la condition d'affichage concerne le nombre de cas susceptibles d'être affichés sur le moyen d'affichage (2) et le moyen de commande (4) permet au moyen d'extraction (4) d'extraire les données relatives aux dates jusqu'à ce nombre de cas.

5. Dispositif de traitement de données selon la revendication 1 dans lequel le moyen de commande (4) est conçu pour afficher un temps réel d'un moment de coupure d'alimentation lorsque l'alimentation est coupée, sur le moyen d'affichage (2) en réponse à une sortie du moyen de détection (4).
